Europäisches Patentamt

European Patent Office

Office européen des brevets

(19)

(11) Veröffentlichungsnummer: **0 275 355 B1**

(12) # EUROPÄISCHE PATENTSCHRIFT

(45) Veröffentlichungstag der Patentschrift:
19.09.90

(51) Int. Cl.⁵: **G11B 27/10**

(21) Anmeldenummer: 87110369.3

(22) Anmeldetag: 17.07.87

(54) CD-Plattenspieler.

(30) Priorität: 29.08.86 DE 3629480

(43) Veröffentlichungstag der Anmeldung:
27.07.88 Patentblatt 88/30

(45) Bekanntmachung des Hinweises auf die Patenterteilung:
19.09.90 Patentblatt 90/38

(84) Benannte Vertragsstaaten:
AT BE CH DE ES FR GB IT LI LU NL SE

(56) Entgegenhaltungen:
EP-A- 0 029 946
EP-A- 0 114 508
EP-A- 0 169 597
EP-A- 0 181 020

PATENT ABSTRACTS OF JAPAN, Band 9,
Nr. 217 (P-385) [1940], 4. September 1985; &
JP-A-60 76 071 (AKAI DENKI K.K.) 30-04-1985
PATENT ABSTRACTS OF JAPAN, Band 9,
Nr. 157 (P-389) [1880], 2. Juli 1985; &
JP-A-60 32 181 (SONY K.K.) 19-02-1985

(73) Patentinhaber: Deutsche Thomson-Brandt GmbH,
Postfach 2060, D-7730 Villingen-Schwenningen(DE)

(72) Erfinder: Baas, Dieter, Sofienstrasse 10,
D-7640 Kehl(DE)

ACTORUM AG

## Beschreibung

Die Erfindung betrifft einen CD-Plattenspieler, bei dem die Anfangszeiten mindestens eines Teils der im Inhaltsverzeichnis einer CD-Platte stehenden Programmblöcke in einem Speicher speicherbar sind und bei dem unter allen Programmblöcken der CD-Platte mehrere auswählbar und zu einem Programm in beliebiger Reihenfolge zusammenstellbar sind.

Welche Daten grundsätzlich auf einer CD-Platte gespeichert sind und wie sie der CD-Plattenspieler verarbeitet, ist in dem Aufsatz "Zusammenstellen eines CD-Programms" aus Funkschau, 15, 18.7.1986 beschrieben.

Jede CD-Platte enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Programmblöcke sind in der Regel Musikstücke, doch kann es sich z.B. auch um gesprochenen Text oder verschiedene Geräuschkulissen für die Vertonung von Filmen oder Dias handeln. Auf einer CD-Platte können bis zu 99 Programmblöcke abgespeichert sein, jedoch finden sich auf einer CD-Platte mit Musik meist nur 10 bis 20 verschiedene Musikstücke.

Beim Einlegen einer CD-Platte in einen CD-Plattenspieler werden die Anfangszeiten der einzelnen Programmblöcke, z.B. der verschiedenen Musikstücke, aus dem Inhaltsverzeichnis ausgelesen und in einen Speicher des CD-Plattenspielers eingelesen. Geräte der teueren Klasse sind mit einem Speicher mit 99 Speicherplätzen ausgestattet, während bei Geräten der mittleren Preisklasse etwa zwischen 15 und 30 Speicherplätze vorgesehen sind. Mittels der abgespeicherten Anfangszeiten ist der CD-Plattenspieler in der Lage, durch gezielte Sprünge von einem Programmblock zu einem anderen die Zugriffszeiten gering zu halten.

Weil, wie bereits erwähnt, CD-Platten mit Musik in der Regel etwa nur 10 bis 20 verschiedene Musikstücke enthalten, genügt ein Speichervermögen von 15 bis 30 Speicherplätzen in den meisten Fällen.

Komfortable CD-Plattenspieler bieten dem Hi-Fi-Hörer die Möglichkeit, unter allen auf einer CD-Platte gespeicherten Musikstücken gewünschte auszuwählen und zu einem Programm mit beliebiger Reihenfolge zusammenzustellen. Diese Annehmlichkeit erfordert jedoch zusätzlichen Speicherraum zum Speichern der zum Programm zusammengestellten Musikstücke. Weil Speicherraum teuer ist, schlägt sich dieser Komfort im Gerätepreis nieder.

Es ist daher Aufgabe der Erfindung, einen CD-Plattenspieler so auszugestalten, daß er ohne zusätzlichen Speicheraufwand die Möglichkeit bietet, gewünschte Programmblöcke auszuwählen und zu einem Programm zusammenzustellen.

Die Erfindung löst diese Aufgabe dadurch, daß die Anfangszeiten der Programmblöcke der Reihe nach im Speicher abgespeichert werden, daß die Nummern der zu einem Programm zusammengestellten m Programmblöcke der Reihe nach von hinten mit dem letzten Speicherplatz beginnend in den Speicher geschrieben werden und daß eventuell bereits mit Anfangszeiten belegte Speicherplätze überschrieben werden.

Eine Lösung dieser Aufgabe für einen CD-Plattenspieler mit einem Speicher, in dem die Anfangszeiten aller auf der CD-Platte gespeicherten Programmblöcke speicherbar sind, besteht darin, daß die Anfangszeiten der zum Programm zusammengestellten m Programmblöcke zu einem Block von m aufeinanderfolgenden Speicherplätzen zusammengefaßt im Speicher abgespeichert werden und daß die dadurch frei gewordenen m Speicherplätze mit den Anfangszeiten belegt werden, die vor Erstellen des Programms in den Speicherplätzen standen, die nun mit den Anfangszeiten der zum Programm zusammengestellten m Programmblöcke belegt sind.

Es zeigen

Figur 1 die Belegung des Speichers bei einem ersten Ausführungsbeispiel;
Figur 2 die Belegung des Speichers bei einem dritten Ausführungsbeispiel;
Figur 3 die Belegung eines Speichers mit 99 Speicherplätzen.

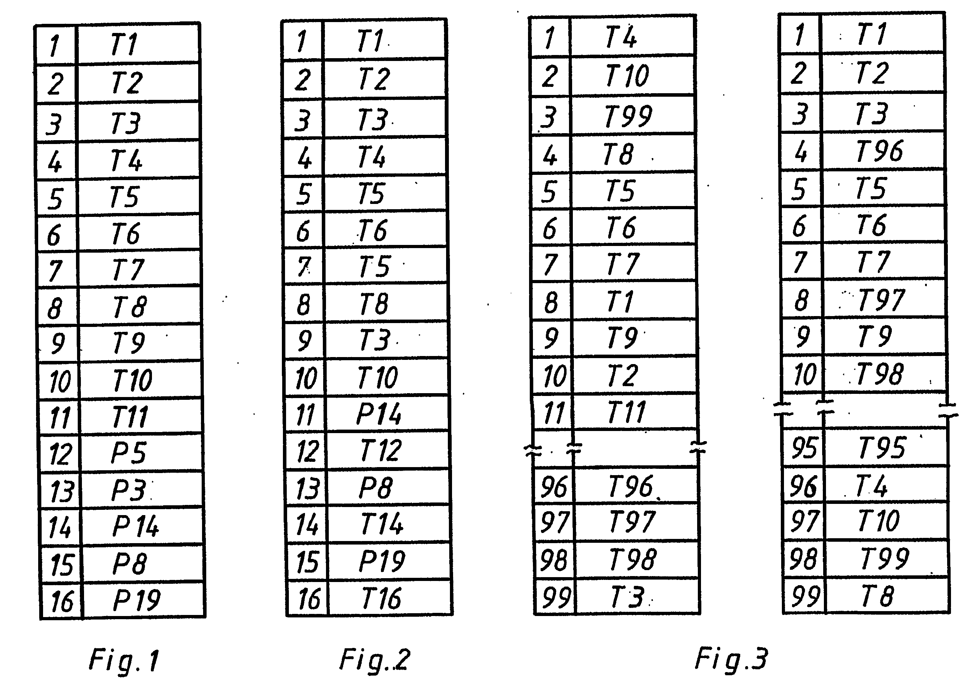

In Figur 1 ist ein Speicher mit 16 Speicherplätzen gezeigt. Die in den CD-Plattenspieler eingelegte CD-Platte soll z.B. 20 Musikstücke enthalten. Nach dem Einlegen der CD-Platte in das Gerät werden zunächst die Anfangszeiten T1 bis T16 der ersten 16 Musikstücke in den Speicher S eingelesen. Nun möchte z.B. der Hörer sich das 19., das 8., das 14., das 3. und das 5. Musikstück in dieser Reihenfolge anhören und programmiert deshalb den Mikrocomputer des CD-Plattenspielers mit diesen Musikstücken. Darauf bewirkt der Mikrocomputer, daß die Nummern P19, P8, P14, P3 und P5 dieser fünf Musikstücke in dieser Reihenfolge mit dem letzten Speicherplatz beginnend von hinten in den Speicher S eingeschrieben werden. Auf den Speicherplätzen 12, 13, 14, 15 und 16 stehen deshalb nun die Nummern P5, P3, P14 P8 und P19. Weil die zuvor in den Speicherplätzen 12 bis 16 abgespeicherten Angangszeiten T12 bis T16 jetzt gelöscht sind, erhöhen sich allerdings die Zugriffzeiten zu den Musikstücken 12 bis 16 geringfügig.

Bei einem zweiten Ausführungsbeispiel wird mit dem Einschreiben der Nummern P19, P8, P14, P3 und P5 in den Speicher S nicht beim letzten, sondern beim vorletzten Speicherplatz begonnen, so daß im letzten, dem 16. Speicherplatz die Anfangszeit T16 stehen bleibt. Die Nummern P19, P8, P14, P3 und P5 werden in die Speicherplätze 15, 14, 13, 12 und 11 geschrieben. Das hat den Vorteil, daß bei Sprüngen zu Musikstücken, die nach dem 16. Musikstück kommen, zuerst gezielt zum 16. Musikstück gesprungen wird und von dort in Schritten zu dem gewünschten Musikstück. Dadurch werden die Zugriffszeiten verringert.

In Figur 2 ist die Belegung des Speichers S bei einem Ausführungsbeispiel gezeigt, mit dem kürzere Zugriffszeiten erzielt werden als beim ersten Ausführungsbeispiel. Die CD-Platte und das vom Hörer zusammengestellte Programm seien gleich wie zuvor. Im Gegensatz zum vorhergehenden Ausführungsbeispiel werden die Nummern P19, P8, P14, P3 und P5 nicht unmittelbar nacheinander im Speicher S abgelegt, sondern es wird nur jeder zweite Speicherplatz mit einer Nummer belegt, so daß zwischen zwei Nummern stets ein Speicherplatz mit einer Anfangszeit liegt. Der letzte Speicherplatz, bei diesem Ausführungsbeispiel der 16. Speicherplatz, bleibt mit der Anfangszeit T16 belegt. Damit ergibt sich die folgende Belegung der Speicherplätze. Die Speicherplätze 1 bis 6 sind mit den Anfangszeiten T1 bis T6 der ersten sechs Musikstücke belegt. In den Speicherplätzen 8, 10, 12, 14 und 16 sind die Anfangszeiten T8, T10, T12, T14 und T16 der Musikstücke 8, 10, 12, 14 und 16 abgespeichert, während in den Speicherplätzen 7, 9, 11, 13 und 15 die Nummern P5, P3, P8 und P19 der zu dem Programm zusammengefaßten Musikstücke stehen. Wenn z.B. das Abtastsystem zum 14. Musikstück springen soll, springt es zuerst gezielt entweder zum Musikstück 13 oder 15 und von dort in einem ebenfalls gezielten Vorwärts- oder Rückwärtssprung zum 14. Musikstück.

Bei Sprüngen des Abtastsystems zu Musikstücken, die nach dem 16. Musikstück kommen, beispielsweise zum letzten, dem 20. Musikstück, springt das Abtastsystem zuerst gezielt zum 16. Musikstück und von dort tastet es sich in mehreren Sprüngen bis zum 20. Musikstück vor.

Die Zugriffszeit ist geringer als beim Ausführungsbeispiel aus Figur 1, denn bei diesem Ausführungsbeispiel kann nicht gezielt gesprungen werden. Vielmehr muß sich das Abtastsystem vom Speicherplatz 11 ausgehend in mehreren Schritten zum 14. und zum 20. Musikstück vortasten.

Wenn z.B. auf der CD-Platte nur 10 Musikstücke gespeichert sind, während der Speicher S aber 16 Speicherplätze aufweist, und nur 4 Musikstücke vom Hörer zu einem Programm ausgewählt werden, so sind die Speicherplätze 13 bis 16 mit den Nummern der vier ausgewählten Musikstücke belegt, in den Speicherplätzen 1 bis 10 stehen die Anfangszeiten der 10 Musikstücke, dagegen stehen die Speicherplätze 11 und 12 leer. In solchen Fällen werden die Zugriffszeiten durch die Programmierung überhaupt nicht erhöht.

Im Nebenanspruch 2 ist eine Lösung für einen CD-Plattenspieler angegeben, dessen Speicher genau so viele Speicherplätze aufweist, wie auf einer CD-Platte Musikstücke gespeichert sind. Weil, wie bereits erwähnt, bis zu 99 Musikstücke auf einer CD-Platte gespeichert sein können, hat der Speicher S eine Kapazität von 99 Speicherplätzen.

Beim Einlegen der CD-Platte in das Gerät wird das Inhaltsverzeichnis der CD-Platte gelesen, und die Anfangszeiten T1 bis T99 aller 99 Musikstücke werden im Speicher S gespeichert. Es sollen beispielsweise die Musikstücke 4, 10, 99 und 8 in dieser Reihenfolge zu einem Programm ausgewählt werden. nach dem Eingeben des Programms durch die Bedienperson werden die Anfangszeiten T4, T10, T99 und T8 aus ihren Speicherplätzen 4, 10, 99 und 8 geholt und in die Speicherplätze 1, 2, 3 und 4 geschrieben; deren Inhalt, die Anfangszeiten T1, T2 und T3 werden in die leeren Speicherplätze 8, 10 und 99 geschrieben.

Im einzelnen wird dabei z.B. so vorgegangen, daß zuerst die Anfangszeit T1 aus dem Speicherplatz 1 geholt und in einem Zwischenspeicherplatz abgelegt wird. Die Anfangszeit T4 wird aus dem Speicherplatz 4 geholt und in den Speicherplatz 1 geschrieben. Anschließend wird die Anfangszeit T1 aus dem Zwischenspeicherplatz geholt und in den Speicherplatz 4 geschrieben. Aus dem Speicherplatz 2 wird nun die Anfangszeit T2 geholt und in den Zwischenspeicherplatz geschrieben. Der leere Speicherplatz 2 wird mit der Anfangszeit T10 belegt. Aus dem Zwischenspeicherpaltz wird die Anfangszeit T2 geholt und in den Speicherplatz 10 geschrieben. Die Anfangszeit T3 wird aus dem Speicherplatz 3 geholt und im Zwischenspeicherplatz abgelegt. Daraufhin wird die Anfangszeit T99 aus dem Speicherplatz 99 geholt und in den Speicherplatz 3 geschrieben. Die Anfangszeit T3 wird aus dem Zwischenspeicherplatz geholt und in den Speicherplatz 99 geschrieben. Aus dem Speicherplatz 4 wird die Anfangszeit T1 geholt und in den Zwischenspeicherplatz geschrieben. Die Anfangszeit T8 wird aus dem Speicherplatz 8 geholt und in den Speicherplatz 4 geschrieben. Schließlich wird noch die Anfangszeit T1 aus dem Zwischenspeicherplatz geholt und in den Speicherplatz 8 geschrieben.

Die 4 zum Programm gehörenden Anfangszeiten T4, T10, T99 und T8 können z.B. auch in die Speicherplätze 96, 97, 98 und 99 geschrieben werden und deren Inhalt, die Anfangszeiten T96, T97, T98, werden in den leeren Speicherplätzen 4, 8 und 10 abgelegt.

Bei diesem Ausführungsbeispiel sind stets alle Anfangszeiten im Speicher S abgespeichert. Daher erhöhen sich die Zugriffszeiten bei Erstellung eines Musikprogramms nicht.

Bei allen Ausführungsbeispielen ist es sinnvoll, mittels eines Programmzeigers die Grenze im Speicher S zwischen dem Teil, in dem die Anfangszeiten, und dem Teil, in dem die Nummern der zu einem Programm zusammengefaßten Musikstücke gespeichert sind, zu kennzeichnen. Weil der Mikrocomputer des CD-Plattenspielers aber weiß, wieviele Musikstücke vom Bediener programmiert worden sind, kann er auch durch Abzählen der Speicherplätze feststellen, wo die Anfangszeiten stehen, und wo die Nummern der zum Programm zusammengefaßten Musikstücke stehen.

**Patentansprüche**

1. CD-Plattenspieler, bei dem die Anfangszeiten (T1, T2, ..., Tn) mindestens eines Teils der im Inhaltsverzeichnis einer CD-Platte stehenden Programmblöcke in einem Speicher (S) dessen Speicherkapazität für die maximale Anzahl Programmblöcke unzureichend ist speicherbar sind und bei dem unter allen Programmblöcken der CD-Platte mehrere auswählbar und zu einem Programm in beliebiger Reihenfolge zusammenstellbar sind, **dadurch gekennzeichnet**, daß die Anfangszeiten (T1, T2, ..., Tn) der Programmblöcke der Reihe nach im Speicher (S) abgespeichert werden, daß die Nummern (P1, P2, ..., Pm) der zu einem Programm zusammengestellten m Programmblöcke der Reihe nach von hinten in den Speicher (S) geschrieben werden und daß eventuell bereits mit Anfangszeiten belegte Speicherplätze überschrieben werden.

2. CD-Plattenspieler, bei dem die Anfangszeiten (T1, T2, ..., Tn) aller im Inhaltsverzeichnis einer CD-Platte stehenden Programmblöcke in einem Speicher (S) dessen Speicherkapazität für die maximale Anzahl Programmblöcke ausreichend ist speicherbar sind und bei dem unter allen Programmblöcken der CD-Platte mehrere auswählbar und zu einem Programm in beliebiger Reihenfolge zusammenstellbar sind, **dadurch gekennzeichnet**, daß die Anfangszeiten der zum Programm zusammengestellten m Programmblöcke zu einem Block von m aufeinanderfolgenden Speicherplätzen zusammengefaßt im Speicher (S) abgespeichert werden und daß die dadurch frei gewordenen m Speicherplätze mit den Anfangszeiten belegt werden, die vor Erstellen des Programms in den Speicherplätzen standen, die nun mit den Anfangszeiten der zum Programm zusammengestellten m Programmblöcke belegt sind.

3. CD-Plattenspieler nach Anspruch 1, **dadurch gekennzeichnet**, daß beim Einschreiben der Nummern (P1, P2, ..., Pm) der zum Programm zusammengestellten m Programmblöcke in den Speicher (S) mit dem letzten Speicherplatz begonnen wird.

4. CD-Plattenspieler nach Anspruch 1, **dadurch gekennzeichnet**, daß beim Einschreiben der Nummern (P1, P2, ..., Pm) der zum Programm zusammengestellten m Programmblöcke in den Speicher (S) mit dem vorletzten Speicherplatz begonnen wird, so daß der letzte, der n-te, Speicherplatz mit der Anfangszeit Tn belegt bleibt.

5. CD-Plattenspieler nach Anspruch 1, 3 oder 4, **dadurch gekennzeichnet**, daß beim Einschreiben der Nummern (P1, P2, ..., Pm) der zu einem Programm zusammengestellten m Programmblöcke nur jeder k-te mit einer Anfangszeit belegte Speicherplatz überschrieben wird.

6. CD-Plattenspieler nach Anspruch 5, **dadurch gekennzeichnet**, daß k zu zwei gewählt ist.

7. CD-Plattenspieler nach Anspruch 2, **dadurch gekennzeichnet**, daß die m Anfangszeiten der zu einem Programm zusammengestellten Programmblöcke die ersten m Speicherplätze des Speichers (S) belegen.

8. CD-Plattenspieler nach Anspruch 2, **dadurch gekennzeichnet**, daß die m Anfangszeiten der zu einem Programm zusammengestellten Programmblöcke die letzten m Speicherplätze des Speichers (S) belegen.

## Claims

1. CD disc player, in which the starting times (T1, T2, ..., Tn) of at least one part or the program blocks contained in the contents list of a CD disc are storable in a store (S) whose storage capacity is insufficient for the maximum number of program blocks and in which among all the program blocks of the CD disc several are selectable and assemblable into a program in any sequence, characterised in that the starting times (T1, T2, ..., Tn) of the program blocks are stored in sequence in the store (S), that the numbers (P1, P2, ..., Pm) of the m program blocks assembled into a program are written into the store (S) in reverse sequence and that any storage spaces already filled with starting times are overwritten.

2. CD (disc player, in which the starting times (T1, T2, ..., Tn) or all the program blocks contained in the contents list of a CD disc are storable in a store S whose storage capacity; is sufficient for the maximum number of program blocks and in which among all the program blocks of the CD disc several are selectable and assemblable into a program in any sequence, chacterised in that the starting times of the m program blocks assembled into the program are stored in the store S combined into a block of m successive storage spaces and that the m storage spaces which have thereby become free are filled with the starting times which occupied; prior to the creation of the program, the storage spaces that are now filled with the starting times of the m program blocks assembled into the program.

3. CD disc player according to claim 1, characterised in that in the writing into the store (S) of the numbers (P1, P2, ..., Pm) of the m program blocks assembled into the program the last storage space is taken first.

4. CD disc player according to claim 1, characterised in that in the writing into the store (S) of the numbers (P1, P2, ... Pm) of the m program blocks assembled into the program the last but one storage space is taken first, so that the last, the n-th, storage space remains filled with the starting time Tn.

5. CD disc player according to claim 1, 3 or 4, characterised in that in the writingin of the numbers (P1, P2, ..., Pm) of the m program blocks assembled into a program only each k-th storage space filled with a starting time is overwritten.

6. CD disc player according to claim 5, characterised in that k is selected as two.

7. CD disc player according to claim 2, characterised in that the m starting times of the program blocks assembled into a program fill the first m storage spaces of the store (S).

8. CD disc player according to claim 2, characterised in that the m starting times of the program blocks assembled into a program fill the last m storage spaces of the store (S).

## Revendications

1. Lecteur CD permettant de stocker dans une mémoire (S) dont la capacité de mémoire est insuffisante pour le nombre maximal de blocs de programme, les instants de début (T1, T2, ..., Tn) d'une partie au moins des blocs de programme indiqués dans le répertoire d'un disque CD, et de sélectionner plusieurs blocs de programme parmi tous ceux se trouvant sur le disque CD et de les réunir dans un programme dans un ordre quelconque, caractérisé en ce que les instants de début (T1, T2, ..., Tn) des blocs de programme sont enregistrés l'un après l'autre dans la mémoire (S), que les numéros (P1, P2, ..., Pm) des m blocs de programme réunis dans un programme sont entrés successivement dans la mémoire (S) en commençant par la fin, et que les instants de début occupant éventuellement déjà. des zones de mémoire sont écrasés.

2. Lecteur CD permettant de stocker dans une mémoire (S) dont la capacité de mémoire est suffisante pour le nombre maximal des blocs de programme, les instants de début (T1, T2, ..., Tn) de tous les blocs de programme indiqués dans le répertoire d'un disque CD, et de sélectionner plusieurs blocs de programme parmi tous ceux se trouvant sur le disque CD et de les réunir dans un programme dans n'importe quel ordre, caractérisé en ce que les instants de début des m blocs de programme réunis en programme sont enregistrés dans une mémoire (S), regroupés en un bloc de m zones de mémoire successives, et que les m zones de mémoire ainsi libérées sont alors occupées par les instants de début qui, avant l'établissement du programme, se trouvaient dans les zones de mémoire qui sont maintenant occupées par les instants de début des m blocs de programme réunis en programme.

3. Lecteur CD selon la revendication 1, caractérisé en ce que lors de l'entrée des numéros (P1, P2, ..., Pm) des m blocs de programme réunis en programme dans la mémoire (S) on commence par la dernière zone de mémoire.

4. Lecteur CD selon la revendication 1, caractérisé en ce que lors de l'entrée des numéros (P1, P2, ..., Pm) des m blocs de programme réunis en programme dans la mémoire (5) on commence par l'avant-dernière zone de mémoire, de sorte que la dernière, c'est-à-dire la n-ième zone de mémoire, reste occupée par l'instant de début Tn.

5. Lecteur CD selon la revendication 1, 3 ou 4, caractérisé en ce que lors de l'entrée des numéros (P1, P2, ..., Pm) des m blocs de programme réunis dans un programme, ce n'est que chaque k-ième zone de mémoire occupée par un instant de début qui est écrasée.

6. Lecteur CD selon la revendication 5, caractérisé en ce que k est choisi égal à deux.

7. Lecteur CD selon la revendication 2, caractérisé en ce que les m instants de début des blocs de programme réunis dans un programme occupent les m premières zones de mémoire de la mémoire (S).

8. Lecteur CD selon la revendiration 2, caractérisé en ce que les m instants de début des blocs de programme réunis dans un programme occupent les m dernières zones de mémoire de la mémoire (S).

EP 0 275 355 B1

| | |
|---|---|
| 1 | T1 |
| 2 | T2 |
| 3 | T3 |
| 4 | T4 |
| 5 | T5 |
| 6 | T6 |
| 7 | T7 |
| 8 | T8 |
| 9 | T9 |
| 10 | T10 |
| 11 | T11 |
| 12 | P5 |
| 13 | P3 |
| 14 | P14 |
| 15 | P8 |
| 16 | P19 |

Fig.1

| | |
|---|---|
| 1 | T1 |
| 2 | T2 |
| 3 | T3 |
| 4 | T4 |
| 5 | T5 |
| 6 | T6 |
| 7 | T5 |
| 8 | T8 |
| 9 | T3 |
| 10 | T10 |
| 11 | P14 |
| 12 | T12 |
| 13 | P8 |
| 14 | T14 |
| 15 | P19 |
| 16 | T16 |

Fig.2

| | |
|---|---|
| 1 | T4 |
| 2 | T10 |
| 3 | T99 |
| 4 | T8 |
| 5 | T5 |
| 6 | T6 |
| 7 | T7 |
| 8 | T1 |
| 9 | T9 |
| 10 | T2 |
| 11 | T11 |
| 96 | T96 |
| 97 | T97 |
| 98 | T98 |
| 99 | T3 |

| | |
|---|---|
| 1 | T1 |
| 2 | T2 |
| 3 | T3 |
| 4 | T96 |
| 5 | T5 |
| 6 | T6 |
| 7 | T7 |
| 8 | T97 |
| 9 | T9 |
| 10 | T98 |
| 95 | T95 |
| 96 | T4 |
| 97 | T10 |
| 98 | T99 |
| 99 | T8 |

Fig.3